**Europäisches Patentamt**

(19) **European Patent Office**

**Office européen des brevets**

(11) Veröffentlichungsnummer: **0 232 922**
**B1**

(12) **EUROPÄISCHE PATENTSCHRIFT**

(45) Veröffentlichungstag der Patentschrift:
**14.06.89**

(21) Anmeldenummer: **87200002.1**

(22) Anmeldetag: **03.01.87**

(51) Int. Cl.⁴: **F 16 C 33/20, F 16 D 69/02**

(54) Verbund-Gleitlagerwerkstoff.

(30) Priorität: **21.01.86 DE 3601569**

(43) Veröffentlichungstag der Anmeldung:
**19.08.87 Patentblatt 87/34**

(45) Bekanntmachung des Hinweises auf die Patenterteilung:
**14.06.89 Patentblatt 89/24**

(84) Benannte Vertragsstaaten:
**AT DE ES FR GB IT NL SE**

(56) Entgegenhaltungen:
**EP-A- 0 120 130**
**EP-A- 0 163 937**
**EP-A- 0 168 866**
**EP-A- 0 168 869**
**GB-A- 2 139 236**
**GB-A- 2 150 464**
**US-A- 3 808 130**

(73) Patentinhaber: **KOLBENSCHMIDT Aktiengesellschaft,**
**Karl-Schmidt-Strasse 8/12 Postfach 1351,**
**D-7107 Neckarsulm (DE)**

(72) Erfinder: **Braus, Jürgen,**
**Johann-Jakob-Astor-Strasse 53, D-6909 Walldorf (DE)**
Erfinder: **Baureis, Hans-Paul, Höhenweg 6,**
**D-6909 Dielhem, Horrenberg (DE)**
Erfinder: **Bickle, Wolfgang, Friedenstrasse 15,**
**D-6831 Reilingen (DE)**

(74) Vertreter: **Rieger, Harald, Dr., Reuterweg 14,**
**D-6000 Frankfurt am Main (DE)**

## Beschreibung

Die Erfindung betrifft einen Verbund-Gleitlagerwerkstoff, bei dem eine Matrix aus Polymerem so mit einem metallischen Rauhgrund verbunden ist, dass über dem Rauhgrund eine 0,01 bis 2,0 mm dicke Reib- bzw. Gleitschicht aus Polymerem vorhanden ist.

Wegen ihrer im Vergleich zu metallischen Gleitlagerwerkstoffen geringeren Festigkeit, ihrer grösseren Wärmeausdehnung und ihrer schlechteren Wärmeleitung ist die Verwendung von Polymeren zur Herstellung von Vollwand-Gleitlagern begrenzt. Dem wird dadurch begegnet, dass eine Matrix aus Polymerem ggf. mit Zusätzen u. a. von Blei, Molybdändisulfid, Graphit, gläsernen oder anderen anorganischen Fasern — einzeln oder zu mehreren — auf einen durch ein Metallgewebe oder Streckmetall gebildeten Rauhgrund aufgewalzt oder aufgepresst und dann gesintert wird (DD-A-30 963, DE-A-2001 101, EP-A-0 040 448).

In der EP-A-0 163 937 ist ein Verbund-Gleitlagerwerkstoff beschrieben, bei dem auf einem metallischen Rücken eine metallische Zwischenschicht porös aufgesintert ist. Die Poren dieser Zwischenschicht sind mit einer Mischung aus Polytetrafluoräthylen mit 2 bis 10 Vol.% wenigstens einem der Werkstoffe Zinnbronze, andere Kupferlegierungen und Gemische derselben, 5 bis 30 Vol.% wenigstens einem der Werkstoffe Blei, Cadmium, Bleioxid, Cadmiumoxid und Gemische derselben sowie 5 bis 30 Vol.% wenigstens einem der Werkstoffe natürlicher und künstlicher Graphit oder ein Gemisch derselben ausgefüllt. Diese Mischung bildet gleichzeitig eine 0,05 bis 0,5 mm dicke Gleitschicht über der porösen metallischen Zwischenschicht.

Nach der DE-PS 29 28 081 ist das die Matrix bildende fluorhaltige Polymere entweder unmittelbar auf die durch mechanisches oder chemisches Aufrauhen der Oberfläche einer metallischen, vorzugsweise aus Stahl bestehenden Stützschicht oder auf einen durch eine auf die metallische Stützschicht porös aufgesinterte oder aufgespritzte 0,2 bis 0,6 mm dicke Schicht aus gute Reib- bzw. Gleiteigenschaften aufweisendem metallischem Werkstoff gebildeten Rauhgrund in der Weise aufgewalzt oder aufgepresst, dass über dem Rauhgrund eine aus der Matrix gebildete Reib- bzw. Gleitschicht von 30 bis 500 µm Dicke vorhanden ist. Durch den Rauhgrund wird eine ausgezeichnete Verbindung der Matrix mit der Stützschicht erzielt. Dadurch ist garantiert, dass die aus dem Verbund-Gleitlagerwerkstoff hergestellten Gleitlagerelemente hinsichtlich Presssitz, elastischer Eigenschaften und Wärmeausdehnung den metallischen Gleitlagerwerkstoffen sehr ähnlich sind und daher auch vergleichsweise dünnwandig eingesetzt werden können. Gegenüber aus Polymeren gefertigten Vollwand-Gleitlagern haben die Lagerelemente aus Verbund-Gleitlagerwerkstoffen den Vorteil erhöhter Wärmeleitfähigkeit und Festigkeit. Auch sind die aus dem Verbund-Gleitlagerwerkstoff hergestellten Gleitlagerelemente im allgemeinen sehr hoch belastbar bis ca. 150 N/mm², allerdings bei ausserordentlich niedrigen Gleitgeschwindigkeiten von max. 1 m/s. Als echte Grenze gilt bei Trockenlauf 2 m/s, bei einer solchen Gleitgeschwindigkeit ist natürlich keine nennenswerte Belastung mehr möglich. Derartige Verbund-Gleitlagerwerkstoffe sind deshalb hauptsächlich für oszillierenden Bewegungen unterworfene Gleitlagerelemente, wie beispielsweise Gelenklager, eingesetzt. Aber auch als Führungsbuchsen in Stossdämpfern für Kraftfahrzeuge haben sich die aus Verbund-Gleitlagerwerkstoffen gefertigten Gleitlagerelemente eine breite Anwendung gesichert. Da bei den aus Verbund-Gleitlagerwerkstoffen erzeugten wartungsfreien Gleitlagerelementen keine hydrodynamische Schmierung vorhanden ist, muss trotz der Zusätze von das Reib- bzw. Gleitverhalten verbessernden Stoffen, wie Blei, Molybdändisulfid, Graphit oder dergleichen, mit einem stetig fortschreitenden Verschleiss gerechnet werden.

Der Erfindung liegt deshalb die Aufgabe zugrunde, bei dem eingangs beschriebenen Verbund-Gleitlagerwerkstoff insbesondere die Verschleissfestigkeit der Reib- bzw. Gleitschicht zu verbessern und damit die Lebensdauer bzw. die Gebrauchsdauer der daraus hergestellten Gleitlager zu erhöhen, ohne jedoch das gute Reibverhalten, die gute Temperaturbeständigkeit, das günstige Wärmeausdehnungsverhalten und die feste Verbindung der Reib- bzw. Gleitschicht mit dem Rauhgrund zu beeinträchtigen.

Erfindungsgemäss ist diese Aufgabe dadurch gelöst, dass die Reib- bzw. Gleitschicht 0,01 bis 2,0 mm dick ist und die Matrix 5 bis 40 Vol.% Zinksulfid oder Bariumsulfat mit einer Korngrösse von 0,1 bis 1,0 µm mit einer mittleren Korngrösse von 0,3 µm enthält. Durch die Verwendung des ausgesprochen feinteiligen Zinksulfids bzw. Bariumsulfats wird das Verschleissverhalten der Reib- bzw. Gleitschicht des Verbund-Gleitlagerwerkstoffs so deutlich verbessert, dass die Gebrauchsdauer um bis zu 35% erhöht wird. Die anderen mechanischtechnologischen Eigenschaften werden dadurch nicht beeinträchtigt. Darüber hinaus wird der Einsatzbereich der aus dem Verbund-Gleitlagerwerkstoff hergestellten Gleitlagerelemente verbreitert, da durch die Abwesenheit von Blei die Gleitlagerelemente beispielsweise auch für Maschinen der pharmazeutischen und Lebensmittelindustrie verwendet werden können.

Die Bezeichnung «Polymeres» umfasst insbesondere die bekannten Polymere Polytetrafluoräthylen, Polyvinylidenfluorid, Polyethersulfon, Polyetheretherketon, Polyetherimid, Polyphenylensulfid, Polyacetal, Polyamid und Polyimid. Diese Polymere bilden einzeln oder im Gemisch von wenigstens zweien im Volumenverhältnis von 5 bis 35% die Matrix der Reib- bzw. Gleitschicht des erfindungsgemässen Verbund-Gleitlagerwerkstoffs.

Der Begriff «Zinksulfid» umfasst auch solche Zinksulfidteilchen, die noch 1 bis 5 Vol.% Bariumsulfat und ggf. noch 0,05 bis 0,5 Vol.% Zinkoxid enthalten.

Wenn im Rahmen der weiteren Ausbildung der Erfindung die Matrix die Festigkeit erhöhende Zusätze von Glasfasern, Glasperlen, Kohlefasern, Keramikfasern und Aramidfasern einzeln oder zu mehreren in einer Menge von 5 bis 40 Vol.%, vorzugsweise 10 bis 25 Vol.%, enthält, üben Zinksulfid bzw. Bariumsulfat die Wirkung eines Trockenschmiermittels aus.

Die Kohlefasern, Glasfasern, Keramikfasern und Aramidfasern besitzen eine Länge von $\leq 500$ µm, vorzugsweise 50 bis 300 µm, und einen Durchmesser von $\leq 100$ µm, vorzugsweise 5 bis 50 µm. Die Glaskugeln weisen einen Durchmesser von 1 bis 50 µm auf.

Eine besonders vorteilhafte Ausführungsform des erfindungsgemäss ausgebildeten Verbund-Gleitlagerwerkstoffs besteht darin, dass die die Reib- bzw. Gleitschicht bildende Matrix aus einem Gemisch von 55 Vol.% PTFE mit einer Korngrösse von > 3 bis < 10 µm, 15 Vol.% Glasfasern mit einem Durchmesser von $\leq 20$ µm und einer Länge von $\leq 150$ µm, 25 Vol.% Zinksulfid mit einer Korngrösse von $\leq 1$ µm und 5 Vol.% Aramidfasern mit einem Durchmesser von $\leq 10$ µm und einer Länge von $\leq 300$ µm besteht.

In einer weiteren vorteilhaften Ausführungsform des Verbund-Gleitlagerwerkstoffs besteht die die Reib- bzw. Gleitschicht bildende Matrix aus 55 Vol.% Polyvinylidenfluorid mit einer Korngrösse von > 60 bis < 315 µm, 25 Vol.% Zinksulfid mit einer Korngrösse von $\leq 1$ µm und 20 Vol.% Glaskugeln mit einer Korngrösse von 1 bis 50 µm.

In einer dritten vorteilhaften Ausführungsform des Verbund-Gleitlagerwerkstoffs ist die die Reib- bzw. Gleitschicht bildende Matrix aus 60 Vol.% Polytetrafluoräthylen mit einer Korngrösse von > 3 bis < 10 µm, 20 Vol.% Glasfasern mit einem Durchmesser von $\leq 20$ µm und einer Länge von $\leq 150$ µm und 20 Vol.% Zinksulfid mit einer Korngrösse $\leq 1$ µm, das 0,5 Vol.% Bariumsulfat enthält, aufgebaut.

Bei einer vierten Ausführungsform des Verbund-Gleitlagerwerkstoffs besteht die die Reib- bzw. Gleitschicht bildende Matrix aus 75 Vol.% Polytetrafluoräthylen mit einer Korngrösse von > 3 bis < 10 µm und 25 Vol.% Bariumsulfat mit einer Korngrösse von $\leq 1$ µm.

Die Matrix befindet sich unmittelbar auf der mechanisch oder chemisch aufgerauhten Oberfläche einer metallischen, insbesondere aus Stahl, Bronze oder einer hochfesten Aluminiumlegierung bestehenden Stützschicht. Nach einer vorzugsweisen Möglichkeit ist die die Reib- bzw. Gleitschicht bildende Matrix auf einen auf eine metallische Stützschicht porös aufgesinterten oder aufgespritzten Rauhgrund aus Bronze aufgetragen. Als Rauhgrund kann auch ein Streckmetall benutzt werden.

Das ausserordentlich feinteilige Zinksulfid bzw. Bariumsulfat ermöglicht eine sehr gute Dispergierbarkeit in dem Polymeren. Bedingt dadurch wird sowohl der Verschleiss der Reib- bzw. Gleitschicht deutlich gesenkt, als auch mechanische Ermüdungsrisse in der Matrix vermieden. Das gilt auch bei sehr hohen Verarbeitungstemperaturen, so dass die guten Eigenschaften des Polymeren voll erhalten bleiben. Da sich Zinksulfid und Bariumsulfat antikorrosiv verhalten, entsteht kein korrosiver Angriff auf den Gleitpartner.

Der erfindungsgemässe Verbund-Gleitlagerwerkstoff wird in der Weise hergestellt, dass das in einem latenten Lösungsmittel dispergierte Polymere zusammen mit 5 bis 40 Vol.% Zinksulfid bzw. Bariumsulfat mit einer Korngrösse von 0,1 bis 1,0 µm mit einer mittleren Korngrösse von 0,3 µm sowie ggf. weiteren, die Reib- bzw. Gleiteigenschaften beeinflussenden Stoffen gemischt, das Gemisch in einer 0,01 bis 2 µm dicken Schicht auf den Rauhgrund aufgetragen, bei Raumtemperatur auf den Rauhgrund aufgewalzt, anschliessend durch kontinuierliches Erwärmen auf ca. 400° C und kurzzeitiges Halten bei dieser Temperatur gesintert und dann die Reib- bzw. Gleitschicht kalibriert wird.

Eine andere Möglichkeit der Herstellung des Verbund-Gleitlagerwerkstoffs besteht darin, dass die aus Polymerem und 5 bis 40 Vol.% Zinksulfid bzw. Bariumsulfat mit einer Korngrösse von 0,1 bis 1,0 µm mit einer mittleren Korngrösse von 0,3 µm sowie ggf. weiteren, das Reib- bzw. Gleitverhalten beeinflussenden Stoffen erzeugte Mischung extrudiert, der hergestellte Formkörper zu einem Band von 0,5 bis 2,5 mm Dicke kalandriert und dann auf den Rauhgrund aufgewalzt wird, wobei der Rauhgrund vorher auf eine solche Temperatur erwärmt wird, dass das Band eine Temperatur von maximal 75° C annehmen kann. Abschliessend wird das Halbzeug kontinuierlich auf 400° C erwärmt, bei dieser Temperatur zum Zwecke der Aussinterung des Polymeren kurzzeitig gehalten und abschliessend kalibriert.

Die Herstellung des Verbund-Gleitlagerwerkstoffes kann auch so durchgeführt werden, dass das pulverförmige Polymere zusammen mit 5 bis 40 Vol.% Zinksulfid bzw. Bariumsulfat mit einer Korngrösse von 0,1 bis 1,0 µm mit einer mittleren Korngrösse von 0,3 µm sowie ggf. weiteren, das Reib- bzw. Gleitverhalten beeinflussenden Stoffen gemischt und das pulverförmige Gemisch auf den Rauhgrund aufgestreut und danach kontinuierlich auf eine Temperatur von 280 bis 380° C erwärmt wird. In einem anschliessenden Walzvorgang wird das Polymere verdichtet, in den Rauhgrund eingewalzt und abschliessend kalibriert.

In der Zeichnung ist die Erfindung näher und beispielsweise erläutert:

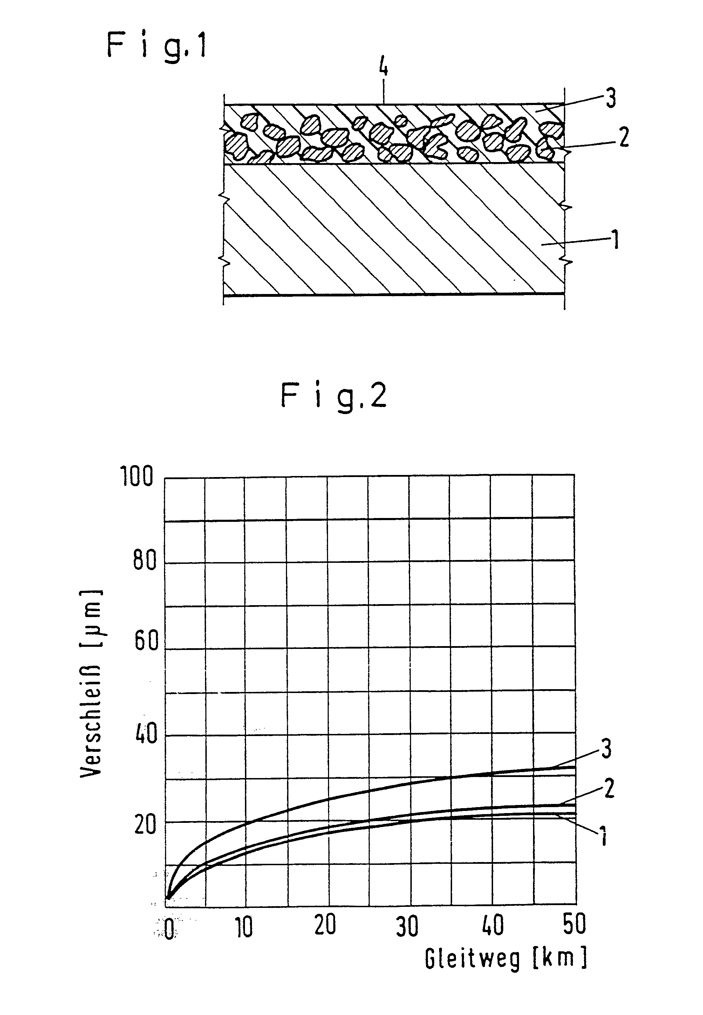

Gemäss Fig. 1 besteht der Verbund-Gleitlagerwerkstoff aus einer Trägerschicht (1) aus Stahl, einem darauf porös aufgesinterten Rauhgrund (2) aus Zinn-Blei-Bronze mit einem offenen Porenvolumen von 35% und der auf den Rauhgrund (2) aufgewalzten Matrix (3) aus Polytetrafluoräthylen mit 20 Vol.% Zinksulfidteilchen und 20 Vol.% Glasfasern. Die Dicke der über dem Rauhgrund (2) befindlichen Reib- bzw. Gleitschicht (4) beträgt 0,35 mm.

Im Diagramm nach Fig. 2 ist die Abhängigkeit des Verschleisses vom Gleitweg für diesen Ver-

bund-Gleitlagerwerkstoff durch Kurve 1 dargestellt. Die Kurve 2 zeigt den Verschleiss für den gleichen Verbund-Gleitlagerwerkstoff, bei dem jedoch anstelle von Zinksulfid Bariumsulfat verwendet wurde.

Das Verschleissverhalten eines Verbund-Gleitlagerwerkstoffs nach dem Stand der Technik, dessen die Reib- bzw. Gleitschicht bildende Matrix aus Polytetrafluoräthylen mit 20 Vol.% Blei und 20 Vol.% Glasfasern besteht, ist durch Kurve 3 wiedergegeben.

## Patentansprüche

1. Verbund-Gleitlagerwerkstoff, bei dem eine Matrix aus Polymerem so mit einem metallischen Rauhgrund verbunden ist, dass über dem Rauhgrund eine 0,01 bis 2,0 mm dicke Reib- bzw. Gleitschicht aus Polymerem vorhanden ist und die Matrix 5 bis 40 Vol.% Zinksulfid oder Bariumsulfat mit einer Korngrösse von 0,1 bis 1,0 µm mit einer mittleren Korngrösse von 0,3 µm enthält.

2. Verbund-Gleitlagerwerkstoff nach Anspruch 1, dadurch gekennzeichnet, dass das die Matrix bildende Polymere aus Polytetrafluoräthylen, Polyvinylidenfluorid, Polyethersulfon, Polyetheretherketon, Polyetherimid, Polyphenylensulfid, Polyacetal oder Polyimid besteht.

3. Verbund-Gleitlagerwerkstoff nach den Ansprüchen 1 und 2, dadurch gekennzeichnet, dass das die Matrix bildende Polymere aus einem Gemisch von wenigstens zwei Polymeren im Volumenverhältnis von 5 bis 35% besteht.

4. Verbund-Gleitlagerwerkstoff nach den Ansprüchen 1 bis 3, dadurch gekennzeichnet, dass das Polymere Glasfasern, Glaskugeln, Kohlefasern, Keramikfasern und Aramidfasern einzeln oder zu mehreren in einer Menge von 5 bis 40 Vol.%, vorzugsweise 10 bis 25 Vol.%, enthält.

5. Verbund-Gleitlagerwerkstoff nach Anspruch 4, dadurch gekennzeichnet, dass die Kohlefasern, Glasfasern, Keramikfasern und Aramidfasern eine Länge von ≦ 500 µm, vorzugsweise 50 bis 300 µm, und einen Durchmesser von ≦ 100 µm, vorzugsweise 5 bis 50 µm, und die Glaskugeln einen Durchmesser von 1 bis 50 µm besitzen.

6. Verbund-Gleitlagerwerkstoff nach den Ansprüchen 1 bis 5, dadurch gekennzeichnet, dass der Rauhgrund durch mechanisches oder chemisches Aufrauhen der Oberfläche einer metallischen Stützschicht, vorzugsweise aus Stahl, Bronze oder einer hochfesten Aluminiumlegierung, gebildet ist.

7. Verbund-Gleitlagerwerkstoff nach den Ansprüchen 1 bis 5, dadurch gekennzeichnet, dass der Rauhgrund durch eine auf eine metallische Stützschicht, vorzugsweise aus Stahl, porös aufgesinterte oder aufgespritzte Schicht aus Bronze gebildet ist.

8. Verbund-Gleitlagerwerkstoff nach den Ansprüchen 1 bis 5, dadurch gekennzeichnet, dass der Rauhgrund aus Streckmetall besteht.

9. Verbund-Gleitlagerwerkstoff nach einem oder mehreren der Ansprüche 1 bis 8, dadurch gekennzeichnet, dass die Zinksulfidteilchen 1 bis 5 Vol.% Bariumsulfat und ggf. noch 0,05 bis 0,5 Vol.% Zinkoxid enthalten.

10. Verbund-Gleitlagerwerkstoff nach einem oder mehreren der Ansprüche 1 bis 9, bestehend aus 55 Vol.% Polytetrafluoräthylen mit einer Korngrösse von > 3 µm bis < 10 µm, 15 Vol.% Glasfasern mit einem Durchmesser von ≦ 10 µm und einer Länge von ≦ 150 µm, 25 Vol.% Zinksulfid mit einer Korngrösse von ≦ 1 µm und 5 Vol.% Aramidfasern mit einem Durchmesser von ≦ 10 µm und einer Länge von ≦ 300 µm.

11. Verbund-Gleitlagerwerkstoff nach einem oder mehreren der Ansprüche 1 bis 9, bestehend aus 55 Vol.% Polyvinylidenfluorid mit einer Korngrösse von > 60 bis < 315 µm, 25 Vol.% Zinksulfid mit einer Korngrösse von ≦ 1 µm und 20 Vol.% Glaskugeln mit einem Durchmesser von 1 bis 50 µm.

12. Verbund-Gleitlagerwerkstoff nach einem oder mehreren der Ansprüche 1 bis 9, bestehend aus 60 Vol.% Polytetrafluoräthylen mit einer Korngrösse von > 3 bis < 10 µm, 20 Vol.% Glasfasern mit einem Durchmesser von ≦ 20 µm und einer Länge von ≦ 150 µm und 20 Vol.% Zinksulfid mit einer Korngrösse von ≦ 1 µm, dessen Teilchen 0,5 Vol.% Bariumsulfat enthalten.

13. Verfahren zur Herstellung des Verbund-Gleitlagerwerkstoffs nach einem oder mehreren der Ansprüche 1 bis 12, wobei das in einem latenten Lösungsmittel dispergierte Polymere zusammen mit 5 bis 40 Vol.% Zinksulfid bzw. Bariumsulfat mit einer Korngrösse von 0,1 bis 1,0 µm mit einer mittleren Korngrösse von 0,3 µm sowie ggf. weiteren, die Reib- bzw. Gleiteigenschaften beeinflussenden Stoffen gemischt, das Gemisch in einer 0,01 bis 2 mm dicken Schicht auf den Rauhgrund aufgetragen, bei Raumtemperatur auf den Rauhgrund aufgewalzt, anschliessend durch kontinuierliches Erwärmen auf ca. 400° C und kurzzeitiges Halten bei dieser Temperatur gesintert und dann die Reib- bzw. Gleitschicht kalibriert wird.

14. Verfahren zur Herstellung des Verbund-Gleitlagerwerkstoffs nach einem oder mehreren der Ansprüche 1 bis 12, wobei ein aus Polymerem und 5 bis 40 Vol.% Zinksulfid bzw. Bariumsulfat mit einer Korngrösse von 0,1 bis 1,0 µm mit einer mittleren Korngrösse von 0,3 µm sowie ggf. weiteren, das Reib- bzw. Gleitverhalten beeinflussenden Stoffen bestehendes Gemisch extrudiert, der hergestellte Formkörper zu einem Band von 0,5 bis 2,5 mm Dicke kalandriert und auf den erwärmten Rauhgrund aufgewalzt wird, wobei das Band eine Temperatur von max. 75° C annimmt, und dass abschliessend das Halbzeug zum Zwecke der Aussinterung des Polymeren kontinuierlich auf 400° C erwärmt, kurzzeitig bei dieser Temperatur gehalten und abschliessend kalibriert wird.

15. Verfahren zur Herstellung des Verbund-Gleitlagerwerkstoffs nach einem oder mehreren der Ansprüche 1 bis 12, wobei das pulverförmige Polymere zusammen mit 5 bis 40 Vol.% Zinksulfid bzw. Bariumsulfat mit einer Korngrösse von 0,1 bis 1,0 µm mit einer mittleren Korngrösse von 0,3 µm sowie ggf. weiteren, das Reib- bzw. Gleitverhalten beeinflussenden Stoffen gemischt, das pulverförmige Gemisch auf den Rauhgrund aufgestreut, kontinuierlich auf eine Temperatur von 280 bis 380° C erwärmt, dann verdichtet, in den Rauhgrund eingewalzt und abschliessend kalibriert wird.

## Claims

1. Composite sliding bearing material, in which a matrix formed of polymer is bonded to a roughened metal base in such a way that there is a 0.01 to 2.0 mm thick friction or sliding layer of polymer over the roughened base and the matrix contains 5 to 40% volume zinc sulphide or barium sulphate having a grain size of 0.1 to 1.0 μm with an average grain size of 0.3 μm.

2. Composite sliding bearing material according to Claim 1, characterised in that the polymer forming the matrix consists of polytetrafluoroethylene, polyvinylidene fluoride, polyether sulphone, polyether ether ketone, polyether imide, polyphenylene sulphide, polyacetal or polyimide.

3. Composite sliding bearing material according to Claims 1 and 2, characterised in that the polymer forming the matrix consists of a mixture of at least two polymers in a volume ratio of 5 to 35%.

4. Composite sliding bearing material according to Claims 1 to 3, characterised in that the polymer contains glass fibres, glass spheres, carbon fibres, ceramic fibres and aramide fibres, individually or severally, in a quantity of 5 to 40% volume, preferably 10 to 25% volume.

5. Composite sliding bearing material according to Claim 4, characterised in that the carbon fibres, glass fibres, ceramic fibres and aramide fibres have a length of ≤ 500 μm, preferably 50 to 300 μm, and a diameter of ≤ 100 μm, preferably 5 to 50 μm, and the glass spheres have a diameter of 1 to 50 μm.

6. Composite sliding bearing material according to Claims 1 to 5, characterised in that the roughened base is formed by mechanical or chemical roughening of the surface of a metallic backing layer, preferably made of steel, bronze or a high-strength aluminium alloy.

7. Composite sliding bearing material according to Claims 1 to 5, characterised in that the roughened base is formed by a porous layer of bronze sintered or sprayed on to a metallic backing layer, preferably of steel.

8. Composite sliding bearing material according to Claims 1 to 5, characterised in that the roughened base consists of expanded metal

9. Composite sliding bearing material according to one or more of Claims 1 to 8, characterised in that the zinc sulphide particles contain 1 to 5% volume barium sulphate and optionally also 0.05 to 0.5% volume zinc oxide.

10. Composite sliding bearing material according to one or more of Claims 1 to 9, consisting of 55% volume polytetrafluoroethylene having a grain size of > 3 μm to < 10 μm, 15% volume glass fibres having a diameter of ≤ 20 μm and a length of ≤ 150 μm, 25% volume zinc sulphide having a grain size of ≤ 1 μm and 5% volume aramide fibres having a diameter of ≤ 10 μm and a length of ≤ 300 μm.

11. Composite sliding bearing material according to one or more of Claims 1 to 9, consisting of 55% volume polyvinylidene fluoride having a grain size of > 60 to < 315 μm, 25% volume zinc sulphide having a grain size of ≤ 1 μm and 20% volume glass spheres having a diameter of 1 to 50 μm.

12. Composite sliding bearing material according to one ore more of Claims 1 to 9, consisting of 60% volume polytetrafluoroethylene having a grain size of > 3 to < 10 μm, 20% volume glass fibres having a diameter of ≤ 20 μm and a length of ≤ 150 μm and 20% volume zinc sulphide having a grain size of ≤ 1 μm, the particles of which contain 0.5% volume barium sulphate.

13. Process for producing the composite sliding bearing material according to one or more of Claims 1 to 12, whereby the polymer, which has been dispersed in a latent solvent, is mixed with 5 to 40% volume zinc sulphide or barium sulphate having a grain size of 0.1 to 1.0 μm with an average grain size of 0.3 μm and also optionally additional materials which influence the frictional or sliding properties, the mixture is applied to the roughened base in a layer 0.01 to 2 mm thick, is rolled on to the roughened base at room temperature, then sintered by being continuously heated to approximately 400° C and being maintained at this temperature for a short time, and then the friction or sliding layer is calibrated.

14. Process for producing the composite sliding bearing material according to one or more of Claims 1 to 12, whereby a mixture, consisting of polymer and 5 to 40% volume zinc sulphide or barium sulphate having a grain size of 0.1 to 1.0 μm with an average grain size of 0.3 μm and also optionally additional materials which influence the frictional or sliding behaviour, is extruded, the resulting shaped body formed is calendered to form a strip 0.5 to 2.5 mm thick and is rolled on to the heated roughened base, the strip assuming a temperature of at most 75° C, and that subsequently the half-finished product is heated continuously to 400° C in order to sinter polymer, is maintained at this temperature for a short time and then calibrated.

15. Process for producing the composite sliding bearing material according to one or more of Claims 1 to 12, whereby the powdered polymer is mixed with 5 to 40% volume zinc sulphide or barium sulphate having a grain size of 0.1 to 1.0 μm with an average grain size of 0.3 μm and also optionally additional materials which influence the frictional or sliding behaviour, the powdered mixture is scattered on to the roughened base, continuously heated to a temperature of 280 to 380° C, then compacted, rolled into the roughened base and finally calibrated.

## Revendications

1. Matériau composite pour paliers lisses, dans lequel une matrice en polymère est reliée à une base métallique rugueuse, de façon à avoir sur la base rugueuse une couche de friction ou de glissement en polymère de 0,01 à 2,0 mm d'épaisseur et la matrice contient de 5 à 40% en volume de sulfure de zinc ou de sulfate de baryum, ayant une granulométrie de 0,1 à 1,0 µm avec une granulométrie moyenne de 0,3 µm.

2. Matériau composite pour paliers lisses suivant la revendication 1, caractérisé en ce que le polymère formant la matrice est du polytétrafluoroéthylène, du polyfluorure de vinylidène, une polyéthersulfone, une polyétheréthercétone, un polyéthérimide, du polysulfure de phénylène, du polyacétal ou du polyimide.

3. Matériau composite pour paliers lisses suivant la revendication 1 ou 2, caractérisé en ce que le polymère formant la matrice est constitué d'un mélange d'au moins deux polymères dans le rapport en volume de 5 à 35%.

4. Matériau composite pour paliers lisses suivant l'une des revendications 1 à 3, caractérisé en ce que le polymère contient des fibres de verre, des billes de verre, des fibres de carbone, des fibres de céramique, et des fibres d'aramide, seules ou en combinaison, en une quantité de 5 à 40% en volume et, de préférence, de 10 à 25% en volume.

5. Matériau composite pour paliers lisses suivant la revendication 4, caractérisé en ce que les fibres de carbone, les fibres de verre, les fibres de céramique et les fibres d'aramide ont une longueur ≤ 500 µm et, de préférence, comprise entre 50 et 300 µm et un diamètre ≤ 100 µm et, de préférence, compris entre 5 et 50 µm et les billes de verre ont un diamètre de 1 à 50 µm.

6. Matériau composite pour paliers lisses suivant l'une des revendications 1 à 5, caractérisé en ce que la base rugueuse est formée, en rendant rugueuse, par voie mécanique ou par voie chimique, la surface d'une couche-support métallique, de préférence en acier, en bronze ou en alliage d'aluminium très résistant.

7. Matériau composite pour paliers lisses suivant l'une des revendications 1 à 5, caractérisé en ce que la base rugueuse est formée par une couche de bronze appliquée par frittage ou par projection, de manière qu'elle soit poreuse, sur une couche-support métallique, de préférence en acier.

8. Matériau composite pour paliers lisses suivant l'une des revendications 1 à 5, caractérisé en ce que la base rugueuse est en un métal déployé.

9. Matériau composite pour paliers lisses suivant l'une ou plusieurs des revendications 1 à 8, caractérisé en ce que les particules de sulfure de zinc contiennent de 1 à 5% en volume de sulfate de baryum et, le cas échéant, aussi de 0,05 à 0,5% en volume d'oxyde de zinc.

10. Matériau composite pour paliers lisses suivant l'une ou plusieurs des revendications 1 à 9, constitué de 55% en volume de polytétrafluoroéthylène ayant une granulométrie comprise entre 3 et 10 µm, de 15% en volume de fibres de verre ayant un diamètre ≤ 20 µm et une longueur ≤ 150 µm, de 25% en volume de sulfure de zinc ayant une granulométrie ≤ 1 µm et 5% en volume de fibres d'aramide ayant un diamètre ≤ 10 µm et une longueur ≤ 300 µm.

11. Matériau composite pour paliers lisses suivant l'une ou plusieurs des revendications 1 à 9, constitué de 55% en volume de polyfluorure de vinylidène, ayant une granulométrie comprise entre 60 et 315 µm, de 25% en volume de sulfure de zinc ayant une granulométrie ≤ 1 µm et 20% en volume de billes de verre ayant un diamètre de 1 à 50 µm.

12. Matériau composite pour paliers lisses suivant l'une ou plusieurs des revendications 1 à 9, constitué de 60% en volume de polytétrafluoroéthylène ayant une granulométrie comprise entre 3 et 10 µm, de 20% en volume de fibres de verre ayant un diamètre ≤ 20 µm et une longueur ≤ 150 µm et de 20% en volume de sulfure de zinc ayant une granulométrie ≤ 1 µm, dont les particules contiennent 0,5% en volume de sulfate de baryum.

13. Procédé de préparation du matériau composite pour paliers lisses suivant l'une ou plusieurs des revendications 1 à 12, qui consiste à mélanger le polymère, dispersé dans un solvant latent, à 5 à 40% en volume de sulfure de zinc ou de sulfate de baryum d'une granulométrie comprise entre 0,1 et 1,0 µm et d'une granulométrie moyenne de 0,3 µm ainsi que, le cas échéant, à d'autres substances influant sur les propriétés de friction et de glissement, à déposer le mélange en une couche d'une épaisseur de 0,01 à 2 mm sur la base rugueuse, à l'appliquer par laminage à la température ambiante sur la base rugueuse et ensuite à le fritter par chauffage continu jusqu'à 400° C environ et maintien à cette température pendant une durée brève, puis à calibrer la couche de friction et de glissement.

14. Procédé de préparation du matériau composite pour paliers lisses suivant l'une ou plusieurs des revendications 1 à 12, qui consiste à extruder un mélange constitué d'un polymère et de 5 à 40% en volume de sulfure de zinc ou de sulfate de baryum, d'une granulométrie de 0,1 à 1,0 µm et une granulométrie moyenne de 0,3 µm ainsi que, le cas échéant, d'autres substances influant sur le comportement à la friction et au glissement, à calandrer le corps extrudé produit en une bande de 0,5 à 2,5 mm d'épaisseur et à l'appliquer par laminage sur la base rugueuse chauffée, de sorte que la bande prenne une température de 75° C au maximum et à porter ensuite le demi-produit, en vue de fritter le polymère, à 400° C en continu, à le maintenir brièvement à cette température et finalement à le calibrer.

15. Procédé de préparation du matériau composite pour paliers lisses suivant l'une ou plusieurs des revendications 1 à 12, qui consiste à mélanger le polymère pulvérulent à 5 à 40% en volume de sulfure de zinc ou de sulfate de baryum, d'une granulométrie de 0,1 à 1,0 µm et d'une granulométrie moyenne de 0,3 µm ainsi que, le cas échéant, à d'autres substances influant sur le comportement à la friction et au glissement, à répandre le mélange pulvérulent sur la base rugueuse, à le porter en continu à une température de 280 à 380° C puis à le densifier, à l'incorporer à la couche de base par laminage et enfin à le calibrer.

# Fig.1

# Fig.2